# EUROPÄISCHE PATENTSCHRIFT

(11) **EP 0 736 940 B1**
(45) Veröffentlichungstag und Bekanntmachung des Hinweises auf die Patenterteilung: **02.09.1998**
(21) Anmeldenummer: 95250095.7
(22) Anmeldetag: 20.04.1995
(51) Int. Cl.: H02B 15/00

(54) **Informationstableau**
Information board
Tableau d'information

(30) Priorität: 05.04.1995 DE 9506218 U
(43) Veröffentlichungstag der Anmeldung: 09.10.1996
(73) Patentinhaber: Spiering, Karl-Heinrich, D-23847 Rethwisch (DE)
(72) Erfinder: Spiering, Karl-Heinrich, D-23847 Rethwisch (DE)
(74) Vertreter: Patentanwälte Wenzel & Kalkoff

(56) Entgegenhaltungen:
- EP-A- 0 392 301
- EP-A- 0 621 575
- DE-A- 2 511 513
- DE-A- 4 013 321
- DE-C- 2 842 622
- US-A- 3 608 222
- US-A- 4 658 525

## Beschreibung

Die Erfindung betrifft ein Informations- und Bedientableau insbesondere für elektrische Geräte, umfassend ein Trägerelement und eine Darstellungsfolie.

Solche Tableaus sind aus der Praxis allgemein bekannt. Sie stellen zumeist verkleinerte Abbildungen von Objekten dar, die mit elektrischen Melde-, Anzeige- und Bedieneinheiten in Form von beispielsweise Lampen und Schaltern versehen sein können, um in einfacher und anschaulicher Weise eine Übersicht oder Information über einen Ort oder eine Vorrichtung zu bekommen oder um eine Vorrichtung einfacher bedienen zu können. Beispiele für die Anwendung solcher Tableaus sind insbesondere die Anlagentechnik oder Gebäudepläne.

In der Anlagentechnik dienen die Tableaus dazu, sich in einfacher Weise einen Überblick über den Zustand der betreffenden Anlage verschaffen zu können, indem z.B. durch das Aufleuchten einer Lampe ein Störzustand in der Anlage signalisiert wird. Gebäudepläne werden beispielsweise dazu verwendet, die Beleuchtung in einem Gebäude zentral zu schalten oder aber eine zentrale Anzeige von Warnmeldern zu verwirklichen.

In der DE-OS 40 13 321 ist ein Tableau zur Verwendung in der Anlagentechnik beschrieben. Das Tableau besteht aus einer Träger- oder Grundplatte, die mit Anzeige- und Bedienelementen versehen ist und einem zumindest teilweise lichtdurchlässigen Dekorelement, z.B. einer Dekorfolie, das flächig über der Trägerplatte liegt. Bei dem bekannten Tableau ist die Herstellung der Dekorfolie nachteilig. Diese stellt die oberste Schicht des Tableaus dar, so daß ihre Bedruckung besonderen Anforderungen zur Vermeidung von Abnutzung und Beschädigung genügen muß. Die Grafik wird daher üblicherweise im Siebdruckverfahren auf die Folie gebracht. Dieses Verfahren ist teuer und kann erst in Serienfertigung wirtschaftlich werden. Eine Individualanfertigung ist unter wirtschaftlichen Gesichtspunkten nicht sinnvoll. Besonders augenfällig wird dieser Nachteil, wenn an einer Anlage Änderungen vorgenommen werden sollen, die Änderungen im Informations- und Bedientableau erforderlich machen. Es müssen - zumeist in Zuordnung zu neuen Anzeige- und/oder Bedienelementen - der Anlagengrundriß der Dekorfolie und damit diese verändert werden, womit bei dem bekannten Tableau eine neue Druckvorlage erforderlich wird.

Ein weiteres Tableau ist in der DE-OS 24 58 873 offenbart. Das Tableau besteht aus einem Synoptik-Panel in Sandwich-Bauweise, das eine Basisplatte, eine Lochmaske, eine lichtdurchlässige Folie mit einer Schemagrafik einer technischen Anlage sowie ggf. eine Kunststoffabdeckplatte umfaßt. Ein Nachteil dieses Tableaus ist, daß man entweder, wie auch in der DE-OS 40 13 321 erwähnt, auf eine im Siebdruckverfahren hergestellte Folie angewiesen ist oder aber zusätzlich zur Schemagrafik eine Abdeckplatte aus Kunststoff verwendet. Durch eine solche Abdeckplatte bleiben zwar Anzeigegeräte weiterhin sichtbar, aber Bedienvorrichtungen können nicht einfach von der Platte überdeckt werden, da dadurch ihre Bedienung unmöglich gemacht würde. Stattdessen müssen in der Abdeckung Aussparungen für Bedieneinrichtungen vorgesehen werden, die zumeist abgedichtet sein müssen.

Auch ein in DE-G 90 15 845 offenbartes Tableau arbeitet mit einer transparenten Abdeckscheibe, durch die insbesondere eine Bedienung von Schaltern nicht möglich ist, wodurch wiederum das Vorsehen von Aussparungen erforderlich wird, wenn Bedienelemente in das Tableau integriert werden sollen. Des weiteren ist die Trägerplatte bei diesem Tableau eine Rasterplatte mit in engem Raster angeordneten Durchbrüchen. Nachteilig ist, daß man durch das Raster darauf festgelegt ist, Anzeige- und Bedienvorrichtungen an bestimmten Orten zu positionieren. Ein Abweichen vom vorgegebenen Raster, z.B. bei maßstabsgetreuer Wiedergabe eines Objektes, ist nicht möglich.

Der Erfindung liegt demgegenüber die Aufgabe zugrunde, ein variabel gestaltbares Informations- und Bedientableau zu schaffen, das auch in Einzelanfertigung kostengünstig und einfach herzustellen ist. Des weiteren soll eine Änderung des Tableaus leicht und kostengünstig möglich sein.

Diese Aufgabe wird in Verbindung mit den Merkmalen eines Informations- und Bedientableaus der eingangs genannten Art erfindungsgemäß dadurch gelöst, daß das Tableau mindestens dreischichtig aufgebaut ist, wobei die Vorderfläche des Trägerelements in Form einer Trägerplatte, einer Trägerwand od. dgl. und die Darstellungsfolie einerseits sowie Darstellungsfolie und eine transparente Abdeckfolie andererseits über eine verklebende Adhäsionsbeschichtung lösbar miteinander verbunden sind und die Darstellungsfolie austauschbar ist. Darstellungsfolien gemäß der Erfindung sind nicht nur Kunststoffolien od. dgl. sondern sämtliche blattförmige Einlagen auch aus Papier, Pergament od. dgl. Durch die Adhäsionsbeschichtung ist die Darstellungsfolie sowohl mit dem Trägerelement als auch mit der Abdeckfolie blasenfrei, schnell, einfach und insbesondere auch im Hinblick auf Austauschbarkeit zu verbinden. Sie kann im Bedarfsfall sehr einfach abgelöst und ausgetauscht werden. Die Adhäsionsbeschichtung hat den weiteren Vorteil, daß die Folien ohne Falten und Verwerfungen verklebt werden können, da durch die Adhäsionsbeschichtung keine Feuchtigkeit eindringen kann. Da das Abdeckelement bei der erfindungsgemäßen Ausführungsform eine Folie ist, lassen sich Bedienelemente problemlos in das Tableau integrieren und bleiben durch diese Abdeckungs- und Schutzschicht hindurch bedienbar. Mit der Abdeckfolie in Verbindung mit der vorzugsweise relativ dazu sehr dünnen Darstellungsfolie erhält man u.a. auch den Vorteil, daß die Oberfläche des Tableaus durchgängig ist, und keine Aussparungen für Schalter oder andere Elemente vorgesehen werden müssen. Eine Reinigung des Tableaus ist sehr einfach möglich.

Vorteilhafterweise ist die Abdeckfolie aus chemisch resistentem Material, so daß sie besonders widerstandsfähig und das Tableau auch für die Anlagentechnik geeignet ist.

Die Abdeckfolie ist bevorzugterweise eine nicht reflektierende Folie. Dadurch ist die Darstellungsqualität weiter verbessert.

vorteilhafterweise ist die Darstellungsfolie transparent, so daß elektrische oder mechanische Melde-, Anzeige und/oder Bediengeräte wie z.B. Lampen, Fallklappenrelais od. dgl. durch die Folie hindurch sichtbar sind. Besonders zweckmäßig ist es auch, daß die Folie zur weiteren Verbesserung der Übersichtlichkeit und Bedienerfreundlichkeit mit einer gerasterten und/oder farbigen Bedruckung gestaltet sein kann. Die erfindungsgemäß vorgesehene und angeordnete Darstellungsfolie erlaubt praktisch beliebige farbliche Gestaltungsmöglichkeiten insbesondere mit fließenden Farbübergängen, einer vollflächigen Rasterbedruckung und anderen derartigen Designausführungen.

Um das Anpassen der Darstellungsfolie an eine Änderung des Objektes besonders zu vereinfachen und kostengünstig zu machen, ist die Darstellungsfolie eine über einen computergesteuerten Plotter oder Drucker bedruckte Folie. Über Zeichenprogramme lassen sich auf dem Computer Grafiken erstellen, die über den Plotter oder Drucker ausgeplottet bzw. ausgedruckt werden können. Da eine solche Grafik gespeichert werden kann, sind Änderungen an einem tatsächlichen Objekt auch an der Abbildung sehr einfach durchzuführen, da man nur die gespeicherte Datei entsprechend der eingetretenen Änderungen abwandeln muß und die entsprechende Darstellung dann auf die Folie ausgeben läßt. Es ist kein Erstellen neuer Druckvorlagen mehr notwendig. So sind gerade bei individuellen Anwendungen, d.h bei Einzelanfertigungen von Tableaus, kostengünstige Herstellung und vor allem kostengünstige nachträgliche Änderungen, Anpassungen an veränderte Gegebenheiten wie Räume oder Anlagen u.v.m. gewährleistet.

Das Trägerelement umfaßt vorteilhafterweise eine Kunststoffplatte in Verbindung mit einer Metallplatte. Mittels der Kunststoffplatte lassen sich Anzeige-, Melde- und/oder Befehlsgeräte gut befestigen und anschließen. Eine Kunststoffplatte ist für den Einbau in ein Maschinengehäuse zumeist weniger geeignet. Maschinengehäuse sind üblicherweise aus Metall gefertigt, und der Kunststoff des Trägerelements weist einen vom Metall des Maschinengehäuses sehr verschiedenen Ausdehnungskoeffizienten auf, was bei thermischen Schwankungen dazu führen kann, daß Teile sich verziehen. Dieses wird durch die erfindungsgemäße Ausgestaltung durch Verbindung der Kunststoffplatte mit einer Metallplatte verhindert, indem die Metallplatte als Konstruktionselement zur Verbindung mit dem Gehäuse dient.

Weitere Vorteile und Ausführungsformen oder -möglichkeiten der Erfindung gehen aus der folgenden Beschreibung der in der schematischen Zeichnung dargestellten Ausführungsbeispiele hervor. Es zeigen
Fig. 1 einen Schnitt durch ein erfindungsgemäßes Tableau und
Fig. 2 eine Draufsicht auf ein erfindungsgemäßes Tableau.

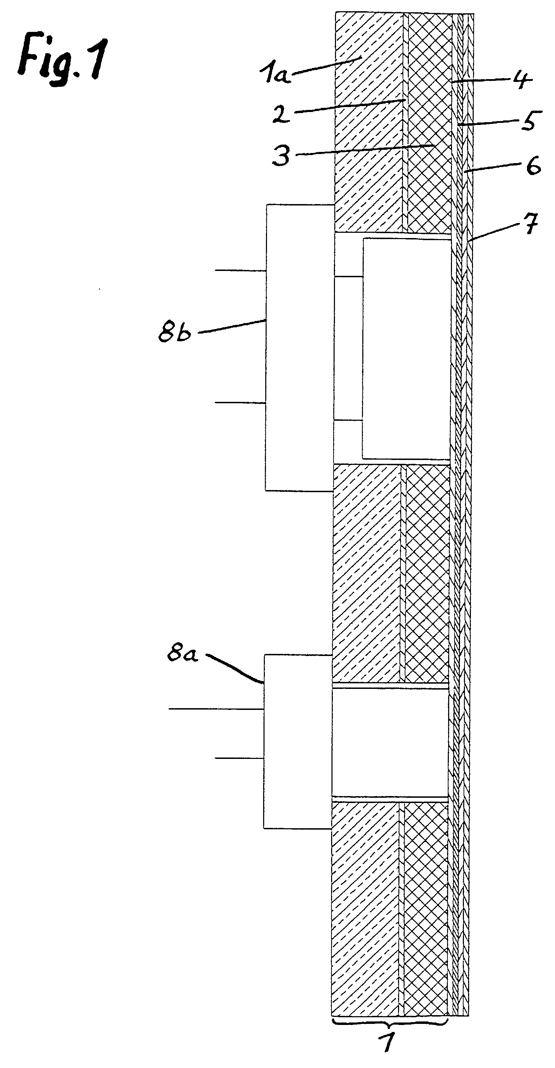

Ein in Fig. 1 dargestelltes Tableau umfaßt ein Trägerelement 1, eine Darstellungsfolie 5 und eine Abdeckfolie 7. Das Trägerelement 1 setzt sich zusammen aus einer bevorzugterweise aus Kunststoff bestehenden Geräteträgerplatte la und einer eloxierten Aluminiumplatte 3. Beide sind durch eine nicht lösbare Klebebeschichtung 2 verbunden.

Mittels einer blasenfrei verklebenden zweckmäßigerweise vollflächigen Adhäsionsbeschichtung 4 ist die Darstellungsfolie 5 mit der Aluminiumplatte 3 lösbar verbunden. Eine weitere blasenfrei verklebende zweckmäßig vollflächige Adhäsionsbeschichtung 6 verbindet die Deckfolie 7 lösbar mit der Darstellungsfolie 5. Solche Adhäsionsbeschichtungen sind sehr vorteilhaft durch einen farbechten, auch hauchdünnen Sprühauftrag gebildet, der von dem Verwender des Tableaus praktisch nicht wahrnehmbar ist.

Das Trägerelement 1 ist mit einem Meldegerät 8a und einem Befehlsgerät 8b ausgestattet. Geräteträgerplatte la und Aluminiumplatte 3 weisen durchgehende Aussparungen auf, in denen die Geräte 8a, 8b eingelassen sind. Die Geräte 8a, 8b sind auf der Geräteträgerplatte la befestigt. Sie schließen bündig mit der Oberfläche der Aluminiumplatte 3 ab, so daß eine durchgehend ebene Oberfläche erreicht wird. Die transparente, farbig bedruckte Darstellungsfolie 5 und die transparente Abdeckfolie 7 bedecken ebenflächig die gesamte Trägerplatte 1. Dabei werden eventuelle Unebenheiten ausgeglichen und eine glatte, ungestörte und bedienungsflexible Oberfläche erreicht, die auch einfach zu pflegen ist. Auch ist eine solche Oberfläche bei einer horizontalen Anordnung des Tableaus beispielsweise in Schaltpulten besonders vorteilhaft als Ablage verwendbar. Insoweit ist zu erwähnen, daß vorteilhaft mittels des erfindungsgemäßen Folienverbundes die Durchdrückfestigkeit oberhalb der Tastelemente geeignet gewählt werden kann.

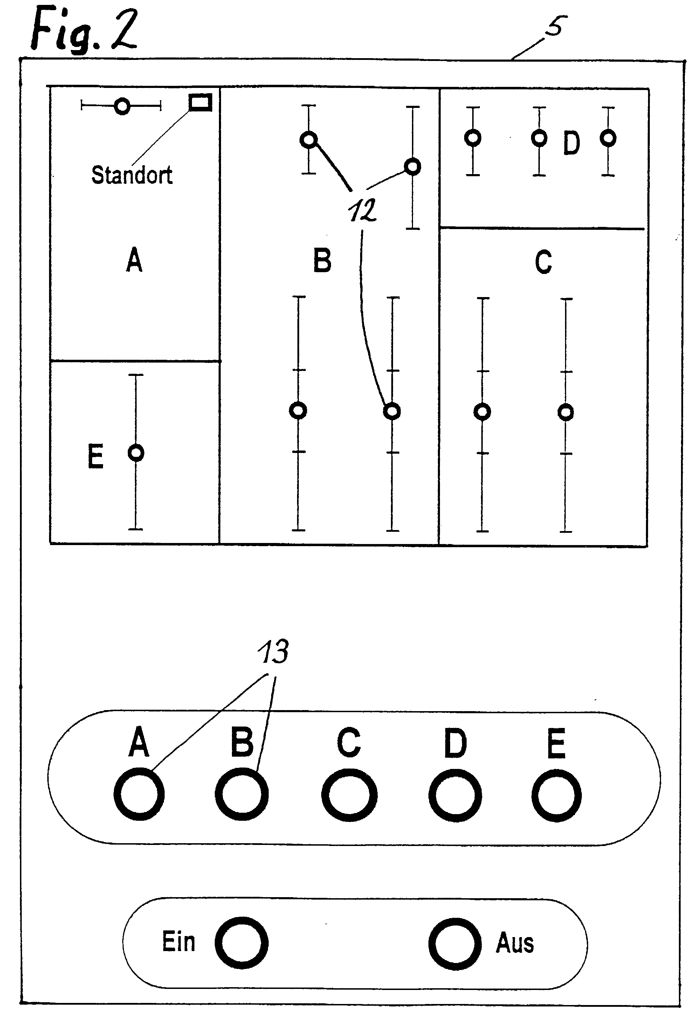

In Fig. 2 ist ein Informations- und Bedientableau zur Beleuchtungssteuerung dargestellt. Entsprechend einem Gebäudegrundriß sind auf der Darstellungsfolie 5 die Räume und dort verlaufende Lichtschienen dargestellt. Einzelnen Lichtschienen sind auf dem Tableau Lämpchen 12 wie LEDs od. dgl. zugeordnet. Über Bereichtstaster 13 werden die Lampen in den einzelnen Räumen an- und ausgeschaltet. Das Aufleuchten der Lampen in den jeweiligen Räumen wird durch Aufleuchten der entsprechenden Lämpchen 12 auf dem Tableau angezeigt. Ein-/Aus-Bedienelemente sind für eine zentrale Schaltung vorgesehen; Das Tableau ist in dem Gebäude an dem eingetragenen Standort installiert. Verändert sich jetzt beispielsweise der Grundriß des Gebäudes durch das Teilen eines Raumes, kann auf dem Computer die Grafik den veränderten Gegebenheiten angepaßt und erneut ausgegeben werden. Diese neue Grafik fügt man durch einfaches Abziehen der Abdeckfolie 7 und Abziehen der zuvor verwendeten Darstellungsfolie 5 und daran anschließendes Auflegen der neuen Darstellungsfolie 5 in das Tableau ein.

Im Ausführungsbeispiel ist ein ebenflächiges Tableau dargestellt. Stattdessen ist es ebensogut möglich, den Tragkörper mit konkav oder konvex gewölbter Oberfläche in flächiger Verbindung mit den darauf angeordneten Folien vorzusehen. Beispiele für derartige Ausführungsformen sind Rundpulte oder Rundwände.

## Patentansprüche

1. Informations- und/oder Bedientableau insbesondere für elektrische Geräte, umfassend ein Trägerelement (1) und eine Darstellungsfolie (5), **dadurch gekennzeichnet,** daß das Tableau mindestens dreischichtig aufgebaut ist, wobei die Vorderfläche des Trägerelements (1) in Form einer Trägerplatte, Trägerwand od. dgl. und die Darstellungsfolie (5) einerseits sowie Darstellungsfolie (5) und eine transparente Abdeckfolie (7) andererseits über eine verklebende Adhäsionsbeschichtung (4, 6) lösbar miteinander verbunden sind und die Darstellungsfolie (5) austauschbar ist.

2. Tableau nach Anspruch 1, **dadurch gekennzeichnet,** daß die Darstellungsfolie (5) transparent ist.

3. Tableau nach Anspruch 1 oder 2, **dadurch gekennzeichnet,** daß die Darstellungsfolie (5) mit einer gerasterten und/oder farbigen Bedruckung versehen ist.

4. Tableau nach einem der Ansprüche 1 bis 3, **dadurch gekennzeichnet,** daß die Darstellungsfolie (5) eine mit einem computergesteurten Plotter oder Drucker bedruckte Folie ist.

5. Tableau nach einem der Ansprüche 1 bis 4, **dadurch gekennzeichnet,** daß an der Rückseite des Trägerelements (1) Melde-, Anzeige- und/oder Befehlsgeräte (8a, 8b) angeordnet sind.

6. Tableau nach einem der Ansprüche 1 bis 5, **dadurch gekennzeichnet,** daß das Trägerelement (1) aus einer Kunststoffplatte (la) in Verbindung mit einer Metallplatte (3), vorzugsweise aus Aluminium besteht, die mit der Darstellungsfolie (5) verbunden ist.

7. Tableau nach einem der Ansprüche 1 bis 6, **dadurch gekennzeichnet,** daß dem Darstellungsinhalt der verwendeten Darstellungsfolie (5) Melde-, Anzeige- und/ oder Befehlsgeräte (8a, 8b) zugeordnet sind, die an dem Trägerelement (1) nachrüstbar und/oder austauschbar angeordnet sind.

8. Tableau nach einem der Ansprüche 1 bis 7, **dadurch gekennzeichnet,** daß die Abdeckfolie (7) chemisch resistent ist.

9. Tableau nach einem der Ansprüche 1 bis 8, **dadurch gekennzeichnet** , daß die Abdeckfolie (7) reflektionsfrei ist.

10. Tableau nach einem der Ansprüche 1 bis 9, **dadurch gekennzeichnet,** daß die Vorderfläche des Trägerelements (1) und damit die Oberfläche des Tableaus eben ist.

11. Tableau nach einem der Ansprüche 1 bis 10, **dadurch gekennzeichnet,** daß die Adhäsionsbeschichtung (4, 6) eine Sprühbeschichtung ist.

## Claims

1. Information and/or operating panel, in particular for electrical devices, comprising a carrier element (1) and a display membrane (5) characterised in that the panel is formed of at least three layers, the front face of the carrier element (1) in the form of a carrier plate, carrier wall or the like and the display membrane (5) on the one hand and the display membrane (5) and a transparent cover membrane (7) on the other hand being detachably connected by a conglutinant adhesion coating (4, 6) and the display membrane (5) being exchangeable.

2. Panel according to claim 1, characterised in that the display membrane (5) is transparent.

3. Panel according to claim 1 or 2, characterised in that the display membrane (5) is provided with a print that is coloured and/or comprises a grid.

4. Panel according to one of claims 1 to 3, characterised in that the display membrane (5) is a membrane printed by a computer-controlled plotter or printer.

5. Panel according to one of claims 1 to 4, characterised in that signalling, display and/or command devices (8a, 8b) are arranged on the rear side of the carrier element (1).

6. Panel according to one of claims 1 to 5, characterised in that the carrier element (1) consists of a plate (la) of synthetic material in connection with a metal plate (3), preferably of aluminium, that is connected to the display membrane (5).

7. Panel according to one of claims 1 to 6, characterised in that signalling, display and/or command devices (8a, 8b) arranged on the carrier element (1) for retrofitting and/or exchange are associated with the display content of the utilised display membrane (5).

8. Panel according to one of claims 1 to 7, characterised in that the cover membrane (7) is resistant to chemicals.

9. Panel according to one of claims 1 to 8, characterised in that the cover membrane (7) is anti-reflecting.

10. Panel according to one of claims 1 to 9, characterised in that the front face of the carrier element (1) and therefore the surface of the panel is level.

11. Panel according to one of claims 1 to 10, characterised in that the adhesion coating (4, 6) is a spray coating.

## Revendications

1. Tableau de commande et/ou de contrôle, en parti-culier pour appareils électriques, comportant un élément support (1) et une feuille d'informations (5), caractérisé en ce que le tableau a une structure au moins tricouche, dans laquelle la face avant de l'élément support (1), sous forme d'une plaque support, d'un panneau support ou analogues, et la feuille d'informations (5) d'une part, et la feuille d'informations (5) et une feuille de recouvrement transparente (7) d'autre part, sont assemblées les unes aux autres d'une manière amovible par l'intermédiaire d'un revêtement adhésif par collage, et la feuille d'informations (5) est interchangeable.

2. Tableau selon la revendication 1, caractérisé en ce que la feuille d'informations (5) est transparente.

3. Tableau selon la revendication 1 ou 2, caractérisé en ce que la feuille d'informations (5) est pourvue d'une impression en simili et/ou en couleurs.

4. Tableau selon l'une des revendications 1 à 3, caractérisé en ce que la feuille d'informations (5) est une feuille imprimée par une table traçante ou une imprimante commandée par ordinateur.

5. Tableau selon l'une des revendications 1 à 4, caractérisé en ce que sur la face arrière de l'élément support (1) sont disposés des appareils indicateurs, d'affichage et/ou d'instructions (8a, 8b).

6. Tableau selon l'une des revendications 1 à 5, caractérisé en ce que l'élément support (1) est constitué d'une plaque (la) en un matériau plastique, en liaison avec une plaque métallique (3), de préférence en aluminium, qui est assemblée à la feuille d'informations (5).

7. Tableau selon l'une des revendications 1 à 6, caractérisé en ce qu'aux informations contenues dans la feuille d'informations (5) utilisée sont affectés des appareils d'indication, d'affichage et/ou d'instructions (8a, 8b), qui sont disposés contre l'élément support de façon à pouvoir être appliqués après-coup et/ou échangés.

8. Tableau selon l'une des revendications 1 à 7, caractérisé en ce que la feuille de recouvrement (7) résiste aux agents chimiques.

9. Tableau selon l'une des revendications 1 à 8, caractérisé en ce que la feuille de recouvrement (7) est anti-réfléchissante.

10. Tableau selon l'une des revendications 1 à 9, caractérisé en ce que la face avant de l'élément support (1), et donc la surface du tableau, sont planes.

11. Tableau selon l'une des revendications 1 à 10, caractérisé en ce que le revêtement adhésif (4, 6) est un revêtement obtenu par pulvérisation.
